# EUROPEAN PATENT APPLICATION

(11) **EP 4 534 174 A1**
(43) Date of publication of application: **09.04.2025**
(21) Application number: 22944787.5
(22) Date of filing: 31.05.2022
(51) Int. Cl.: B01D 53/04

(54) **CARBON DIOXIDE RECOVERY SYSTEM, RESOURCE GENERATION SYSTEM, AND CARBON DIOXIDE RECOVERY METHOD**

(71) Applicant: MITSUBISHI ELECTRIC CORPORATION, Chiyoda-ku Tokyo 100-8310 (JP)
(72) Inventor: ONAKA Yoji, Tokyo 100-8310 (JP); TANISHIMA Makoto, Tokyo 100-8310 (JP); SHINOKI Toshio, Tokyo 100-8310 (JP); KAWAMOTO Makoto, Tokyo 100-8310 (JP); NAKASHIMA Seiji, Tokyo 100-8310 (JP)
(74) Representative: Meissner Bolte Partnerschaft mbB
(86) International application number: PCT/JP2022/022035
(87) International publication number: WO 2023/233498

(57) **Abstract**

The carbon dioxide recovery system (2) according to the present invention includes an air conditioning device (10) including an outdoor unit (11) with a compressor (13), a heat exchanger (14), and an outdoor blower (15), and at least one indoor unit (12) with an indoor blower (16); and a carbon dioxide recovery device (30) that is provided downstream or upstream of the outdoor blower (15) or the indoor blower (16) and that recovers carbon dioxide using air blowing from the outdoor blower (15) or the indoor blower (16).

## Description

### Technical Field

The present invention relates to a carbon dioxide recovery system, a resource generation system, and a carbon dioxide recovery method.

### Background Art

Patent Document 1 discloses a gas removal and concentration device that separates and removes carbon dioxide contained in a treatment target gas from the treatment target gas.

### Citation List

### Patent Document

| | |
|---|---|
| Patent Document 1: | Japanese Unexamined Patent Application, First Publication JP 2021- 94 485 A |

### Summary of theInvention

### Problem to be Solved by the Invention

In this type of device, power is required to recover carbon dioxide.

In view of the above circumstances, the present invention is to provide a carbon dioxide recovery system, a resource generation system, and a carbon dioxide recovery method that is capable of recovering carbon dioxide with a simple structure.

### Means to Solve the Problem

One aspect of the carbon dioxide recovery system according to the present invention includes an air conditioning device including an outdoor unit with a compressor, a heat exchanger, and an outdoor blower, and at least one indoor unit with an indoor blower; and a carbon dioxide recovery device that is provided downstream or upstream of the outdoor blower or the indoor blower and that recovers carbon dioxide using air blowing from the outdoor blower or the indoor blower.

One aspect of the resource generation system according to the present invention includes the carbon dioxide recovery system, a carbon dioxide storage device that stores the carbon dioxide recovered by the carbon dioxide recovery system, and a carbon dioxide recycling system to which the carbon dioxide is supplied from the carbon dioxide storage device.

One aspect of the carbon dioxide recovery method according to the present invention is a recovery method of carbon dioxide using the carbon dioxide recovery system, in which the carbon dioxide recovery device recovers carbon dioxide using air blowing from the outdoor blower or the indoor blower.

### Effects of the Invention

According to the present invention, it is possible to provide a carbon dioxide recovery system, a resource generation system, and a carbon dioxide recovery method that is capable of recovering carbon dioxide with a simple structure.

### Brief Description of the Drawings

FIG. 1 Ablock diagram of a resource generation system according to Embodiment 1.
FIG. 2 A schematic diagram of a carbon dioxide recovery system according to Embodiment 1.
FIG. 3 A block diagram of the carbon dioxide recovery system according to 1.
FIG. 4 A flowchart of a carbon dioxide recovery method according to Embodiment 1.
FIG. 5 Aschematic diagram of a carbon dioxide recovery system according to Embodiment 2.
FIG. 6 Aflowchart of a carbon dioxide recovery method according to Embodiment 2.
FIG. 7 Aschematic diagram of a carbon dioxide recovery system according to Embodiment 3.
FIG. 8 Aschematic diagram of a carbon dioxide recovery system according to Embodiment 4.
FIG. 9 Aflowchart of a carbon dioxide recovery method according to Embodiment 4.
FIG. 10 Aschematic diagram of a carbon dioxide recovery system according to Embodiment 5.
FIG. 11 Aflowchart of a carbon dioxide recovery method according to Embodiment 5.
FIG. 12 Ablock diagram of a carbon dioxide recovery system and a power supply system according to Embodiment 6, and showing a power supply path in a first period.
FIG. 13 Ablock diagram of the carbon dioxide recovery system and the power supply system according to Embodiment 6, and showing a power supply path in a second period.
FIG. 14 Ablock diagram of a carbon dioxide recovery system and a power supply system according to Embodiment 7, and showing a power supply path in a third period.
FIG. 15 Ablock diagram of the carbon dioxide recovery system and the power supply system according to Embodiment 7, and showing a power supply path in a fourth period.

### Description of Embodiments

Hereinafter, an Embodiment of the present invention will be described with reference to the drawings. The scope of the present invention is not limited to the following embodiment, and can be changed in any way within the scope of technical ideas of the present invention.

### Embodiment 1

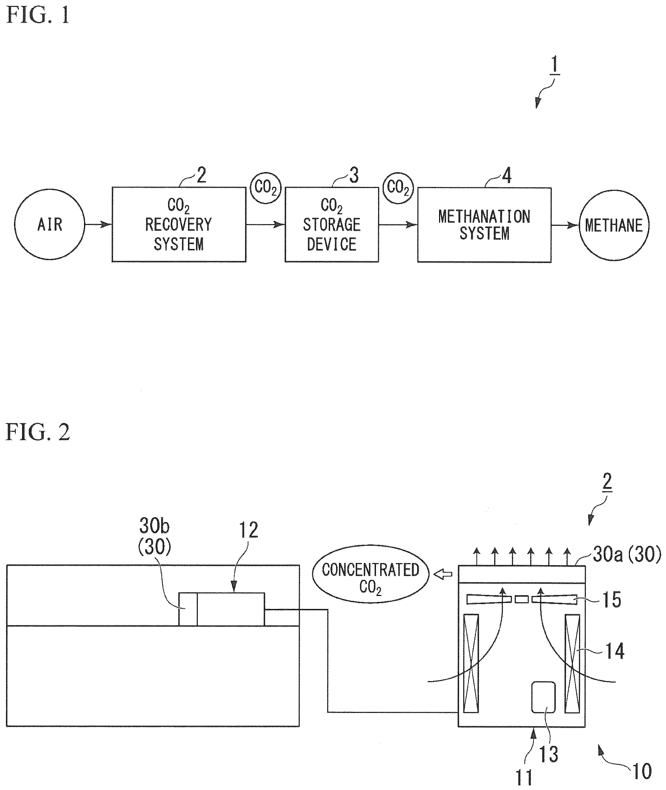

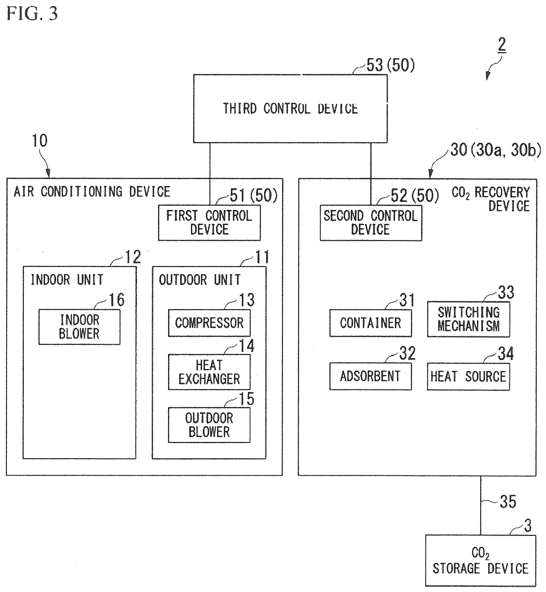

FIG. 1 is a block diagram showing a resource generation system 1 in Embodiment 1. FIG. 2 is a schematic diagram showing a carbon dioxide recovery system 2 in Embodiment 1. FIG. 3 is a block diagram showing the carbon dioxide recovery system 2 in Embodiment 1.

### Resource Generation System 1

The resource generation system 1 recovers carbon dioxide from air and generates resources (for example, methane) from the recovered carbon dioxide. The resource generation system 1 includes a carbon dioxide recovery system 2, a carbon dioxide storage device 3, and a carbon dioxide recycling system 4.

As shown in FIG. 1, the carbon dioxide recovery system 2 recovers carbon dioxide from air. The carbon dioxide storage device 3 stores the carbon dioxide recovered in the carbon dioxide recovery system. The carbon dioxide recycling system 4 is supplied with carbon dioxide from the carbon dioxide storage device 3. The carbon dioxide recycling system 4 generates resources from carbon dioxide. Examples of the carbon dioxide recycling system 4 include a methanation system. The methanation system has a function of generating methane using carbon dioxide, water, electric power, and the like. It should be noted that the carbon dioxide may be transported between the carbon dioxide storage device 3 and the carbon dioxide recycling system 4, for example, through a pipe, or the carbon dioxide may be transported by an operator.

### Carbon Dioxide Recovery System 2

As shown in FIG. 2 and FIG. 3, the carbon dioxide recovery system 2 includes an air conditioning device 10, a carbon dioxide recovery device 30, and a control device 50.

The air conditioning device 10 is installed in, for example, a building (such as an office building or an apartment). The air conditioning device 10 conditions the air in an indoor space (inside a building, indoors). The air conditioning device 10 has functions of cooling, heating, and dehumidifying the indoor space. The air conditioning device 10 may be a device having at least one function of cooling, heating, or dehumidification.

The air conditioning device 10 includes an outdoor unit 11 and an indoor unit 12. In the air conditioning device 10, the refrigerant (thermal medium) circulates between the outdoor unit 11 and the indoor unit 12. It should be noted that one indoor unit 12 may be provided for one outdoor unit 11. In this case, the refrigerant circulates between one outdoor unit 11 and one indoor unit 12. In addition, a plurality of indoor units 12 may be provided for one outdoor unit 11. In this case, the refrigerant circulates between one outdoor unit 11 and the plurality of indoor units 12. In the present embodiment, one indoor unit 12 is provided for one outdoor unit 11.

The outdoor unit 11 includes a compressor 13, a heat exchanger 14, and an outdoor blower 15. The compressor 13 compresses the refrigerant to increase its temperature. The heat exchanger 14 exchanges heat between the refrigerant and the outside air (air). The outdoor blower 15 transfers the outside air, which has been heat-exchanged by the heat exchanger 14, to the outside of the outdoor unit 11. The outdoor blower 15 blows air from the inside of the outdoor unit 11 to the outside.

The indoor unit 12 is installed in a space (indoor space) to be air-conditioned. The indoor unit 12 receives supply of a cold energy or thermal energy from the outdoor unit 11 via the refrigerant, and cools, dehumidifies, and heats the indoor space in which each indoor unit 12 is installed. Examples of the indoor unit 12 include a ceiling-embedded type that is embedded in a ceiling, a ceiling-suspended type that is suspended from a ceiling, and a wall-mounted type that is mounted on a wall surface. Note that the type of the indoor unit 12 is not particularly limited.

The indoor unit 12 includes an indoor blower 16. The indoor blower 16 transfers the air that has undergone heat exchange with the refrigerant in the indoor unit 12 to the indoor space. The indoor blower 16 blows air from the inside of the indoor unit 12 to the outside.

Note that a known configuration can be adopted for the outdoor unit 11 and the indoor unit 12. For example, the outdoor unit 11 may further include an expansion valve that expands the refrigerant, a switching valve that switches a flow direction of the refrigerant, or the like.

The carbon dioxide recovery device 30 is provided downstream or upstream of the outdoor blower 15 or the indoor blower 16. In other words, the carbon dioxide recovery device 30 is provided in at least one of the following locations:
(1) downstream of the outdoor blower 15, (2) upstream of the outdoor blower 15, (3) downstream of the indoor blower 16, or (4) upstream of the indoor blower 16.

Here, the phrase "(1) downstream of the outdoor blower 15" refers to, for example, a space where air from the outdoor blower 15 is blown when the outdoor blower 15 blows air. The phrase "(2) upstream of the outdoor blower 15" refers to, for example, a space where air to be sucked by the outdoor blower 15 is present when the outdoor blower 15 blows air. The phrase "(3) downstream of the indoor blower 16" refers to, for example, a space where air from the indoor blower 16 is blown when the indoor blower 16 blows air. The phrase "(4) upstream of the indoor blower 16" refers to, for example, a space where air to be sucked by the indoor blower 16 is present when the indoor blower 16 blows air.

In the present embodiment, the carbon dioxide recovery system 2 includes a first recovery device 30a and a second recovery device 30b as the carbon dioxide recovery device 30.

The first recovery device 30a is provided in the outdoor unit 11. It is preferable that the first recovery device 30a can be mounted (retrofitted) to the existing outdoor unit 11, for example. In the shown example, the first recovery device 30a is provided (1) downstream of the outdoor blower 15. However, the first recovery device 30a may be provided (2) upstream of the outdoor blower 15. The first recovery device 30a may be provided both (1) downstream of the outdoor blower 15 and (2) upstream of the outdoor blower 15.

The second recovery device 30b is provided in the indoor unit 12. It is preferable that the second recovery device 30b can be mounted (retrofitted) to the existing indoor unit 12, for example. In the shown example, the second recovery device 30b is provided (3) downstream of the indoor blower 16. However, the second recovery device 30b may be provided (4) upstream of the indoor blower 16. The second recovery device 30b may be provided both (3) downstream of the indoor blower 16 and (4) upstream of the indoor blower 16.

The first recovery device 30a recovers carbon dioxide using air blowing from the outdoor blower 15. The second recovery device 30b recovers carbon dioxide using air blowing from the indoor blower 16. That is, each carbon dioxide recovery device 30 recovers carbon dioxide using the air blowing from either the outdoor blower 15 or the indoor blower 16.

Hereinafter, an example of the carbon dioxide recovery device 30 will be described. However, the carbon dioxide recovery device 30 is not limited to the following example.

The carbon dioxide recovery device 30 includes a container 31, an adsorbent 32, a switching mechanism 33, and a heat source 34.

The container 31 has air permeability. Therefore, when the indoor blower 16 or the outdoor blower 15 blows air, the air enters the container 31 or the air inside the container 31 is discharged. That is, the air inside the container 31 and the air outside the container 31 can be exchanged by the air blowing from the indoor blower 16 or the outdoor blower 15.

The container 31 need only be capable of accommodating the adsorbent 32 and has air permeability. For example, in a case where the adsorbent 32 is granular, a plurality of pores smaller than a particle diameter of the adsorbent 32 may be formed in the container 31. The entire container 31 or a part of the container 31 may be mesh. A material of the container 31 may be appropriately changed and may be metal or resin. Other structures can also be adopted for the container 31.

The adsorbent 32 includes a material capable of adsorbing carbon dioxide. Examples of a material capable of adsorbing carbon dioxide include amine, zeolite, silica gel, diatomaceous earth, alumina, activated carbon, and the like. A plurality of materials may be selected and adopted from the above, or a material other than the above may be adopted. The adsorbent 32 may be granular (for example, bead shape (spherical) or pellet shape (cylindrical)).

Alternatively, a powdery adsorbent 32 may be adopted. In this case, the powdery adsorbent 32 may be supported on a surface of the base material. The base material may have, for example, a honeycomb shape. As the adsorbent 32, a material in which the carbon dioxide is separated when the adsorbent 32 which has adsorbed the carbon dioxide is heated (for example, 60 °C to 120 °C) is preferable. The heating temperature is appropriately changed depending on the specific material of the adsorbent 32.

The switching mechanism 33 switches the air flow passage (air passage) of the air blown from the outdoor blower 15 or the indoor blower 16. The switching mechanism 33 switches, for example, the air passage between a first air passage and a second air passage. The air passing through the first air passage has more contact with the adsorbent 32 than the air passing through the second air passage.

In this case, by switching between the first air passage and the second air passage using the switching mechanism 33, the amount of carbon dioxide to be absorbed is adjusted. The air passing through the second air passage may not need to contact the adsorbent 32. Examples of the switching mechanism 33 include, for example, a movable fan. In this case, for example, the air passage is switched depending on a direction of the fan.

The heat source 34 supplies a cold energy or thermal energy to the adsorbent 32. The heat source 34, for example, generates heat and absorbs heat by receiving power. The heat source 34 may supply the cold energy or thermal energy to the adsorbent 32 through, for example, the air blown from the outdoor blower 15 or the indoor blower 16. The heat source 34 may supply the cold energy or thermal energy to the adsorbent 32 using, for example, radiation.

The switching mechanism 33 and the heat source 34 may be omitted.

The carbon dioxide recovery device 30 is connected to the carbon dioxide storage device 3 via a pipe 35. The pipe transfers the carbon dioxide separated from the carbon dioxide recovery device 30 to the carbon dioxide storage device 3. The pipe 35 may be omitted. In this case, for example, the carbon dioxide recovery device 30 can be removable from the air conditioning device 10, and the carbon dioxide is separated from the carbon dioxide recovery device 30 that is removed from the air conditioning device 10.

As a result, the carbon dioxide separated from the carbon dioxide recovery device 30 can be stored in the carbon dioxide storage device 3. In this case, in the carbon dioxide recovery device 30, the container 31 containing the adsorbent 32 may be used as a cartridge, and the container 31 can be removable from, for example, the carbon dioxide recovery device 30 (main body of carbon dioxide recovery device 30).

The control device 50 controls at least the air conditioning device 10 among the air conditioning device 10 and the carbon dioxide recovery device 30. In the present embodiment, the control device 50 controls both the air conditioning device 10 and the carbon dioxide recovery device 30. However, for example, in a case where the carbon dioxide recovery device 30 does not include the switching mechanism 33, the heat source 34, or the like, in other words, in a case where the carbon dioxide recovery device 30 is configured such that the adsorbent 32 is simply accommodated in the container 31, the control device 50 may not need to control the carbon dioxide recovery device 30.

In the present embodiment, the control device 50 includes a first control device 51, a second control device 52, and a third control device 53. The first control device 51 is built into the air conditioning device 10 (for example, at least one of the outdoor unit 11 and the indoor unit 12). The first control device 51 controls each component of the air conditioning device 10. The second control device 52 is built into the carbon dioxide recovery device 30.

The second control device 52 controls each component of the carbon dioxide recovery device 30. The third control device 53 is provided outside the air conditioning device 10 and outside the carbon dioxide recovery device 30. The third control device 53 can communicate with the first control device 51 and the second control device 52. The third control device 53 controls the first control device 51 and the second control device 52.

The control device 50 may not include all of the first control device 51, the second control device 52, and the third control device 53. For example, the control device 50 may include the first control device 51 and the second control device 52, but may not include the third control device 53. In this case, the first control device 51 and the second control device 52 may directly communicate with each other. For example, in a case where the carbon dioxide recovery device 30 has a configuration in which the adsorbent 32 is simply accommodated in the container 31, the control device 50 may not include the second control device 52 and the third control device 53, although the first control device 51 is provided.

### Carbon Dioxide Recovery Method

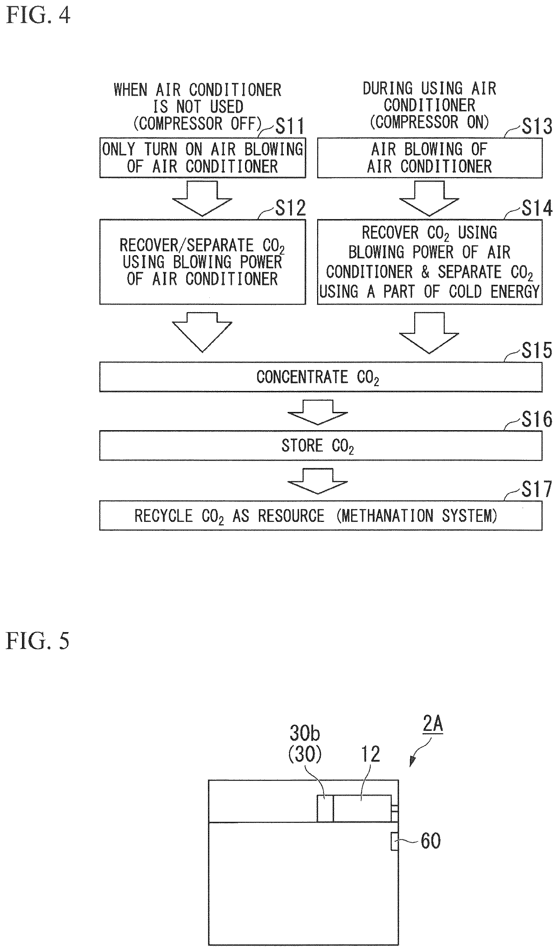

The carbon dioxide recovery method according to the present embodiment uses the aforementioned carbon dioxide recovery system 2. FIG. 4 is a flow chart showing the carbon dioxide recovery method and resource generation method according to Embodiment 1.

As shown in FIG. 4, in the carbon dioxide recovery method according to the present embodiment, the carbon dioxide recovery device 30 recovers carbon dioxide using air blowing from the outdoor blower 15 or the indoor blower 16. Further, the carbon dioxide recovery device 30 uses a thermal energy or cold energy of the refrigerant from the air conditioning device 10 as at least part of the heat source for recovering or separating carbon dioxide.

For example, in the present embodiment, the air conditioning device 10 (also referred to as an "air conditioner" in the drawing. The same applies to the following drawings.) recovers or separates carbon dioxide using blowing power of the air conditioning device 10 even when the indoor air is not conditioned (for example, when the indoor air is neither heated nor cooled). In this case, the control device 50 operates at least one of the outdoor blower 15 or the indoor blower 16 in a state where the compressor 13 is stopped (step S11).

In this case, the carbon dioxide recovery device 30 receives the air blown from the outdoor blower 15 and the indoor blower 16, and the carbon dioxide is recovered and separated in the carbon dioxide recovery device 30 that received the air (step S12). In this case, it is preferable that the control device 50 appropriately controls the heat source 34 of the carbon dioxide recovery device 30 to promote the recovery and separation of carbon dioxide.

Further, in the present embodiment, the air conditioning device 10 also recovers or separates carbon dioxide using the blowing power of the air conditioning device 10 even when the air conditioning device 10 conditions the indoor air (for example, when the indoor space is heated or cooled). In this case, the control device 50 operates both the outdoor blower 15 and the indoor blower 16 in a state where the compressor 13 is in operation (step S13).

In this case, the carbon dioxide recovery device 30 receives the air blown from the outdoor blower 15 and the indoor blower 16, and the carbon dioxide is recovered and separated in the carbon dioxide recovery device 30 that received the air (step S14). The air sent from the outdoor blower 15 or the indoor blower 16 to the carbon dioxide recovery device 30 receives a thermal energy or cold energy from the refrigerant, and the temperature thereof is adjusted.

Therefore, in the present embodiment, it is preferable that the control device 50 controls at least the air conditioning device 10 among the air conditioning device 10 and the carbon dioxide recovery device 30 such that a thermal energy or cold energy of a refrigerant of the air conditioning device 10 serves as at least a part of a heat source for recovery or separation of carbon dioxide by the carbon dioxide recovery device 30.

For example, in a case where the heat source 34 of the second recovery device 30b (the carbon dioxide recovery device 30 provided in the indoor unit 12) needs to generate a thermal energy and the air conditioning device 10 is in heating mode, the amount of the thermal energy generated by the heat source 34 of the second recovery device 30b can be reduced by the amount of the thermal energy received by the second recovery device 30b through the air blowing from the indoor blower 16.

Additionally, in a case where the heat source 34 of the second recovery device 30b needs to generate a cold energy and the air conditioning device 10 is in cooling mode, the amount of the cold energy generated by the heat source 34 of the second recovery device 30b can be reduced by the amount of the cold energy received by the second recovery device 30b through the air blowing from the indoor blower 16.

For example, in a case where the heat source 34 of the first recovery device 30a (the carbon dioxide recovery device 30 provided in the outdoor unit 11) needs to generate a thermal energy and the air conditioning device 10 is in heating mode, the amount of the cold energy generated by the heat source 34 of the first recovery device 30a can be reduced by the amount of the cold energy received by the first recovery device 30a through the air blowing from the outdoor blower 15.

Additionally, in a case where the heat source 34 of the first recovery device 30a needs to generate a thermal energy and the air conditioning device 10 is in cooling mode, the amount of the thermal energy generated by the heat source 34 of the first recovery device 30a can be reduced by the amount of the thermal energy received by the first recovery device 30a through the air blowing from the outdoor blower 15.

It should be noted that, in a case where the heat source 34 of the second recovery device 30b needs to generate a thermal energy and the air conditioning device 10 is in cooling mode, when the amount of heat required by the carbon dioxide recovery device 30 and the amount of heat supplied to the carbon dioxide recovery device 30 by the air conditioning device 10 have their positive and negative signs inverted, for example, the control device 50 may control the switching mechanism 33.

In this case, for example, the switching mechanism 33 may switch the air passage to the second air passage. In addition, in a case where the positive and negative signs of the amount of heat are inverted as described above, the control device 50 may control the heat source 34 without controlling the switching mechanism 33, and may further increase the amount of heat supplied by the heat source 34.

Here, in the present embodiment, the carbon dioxide recovery device 30 may not recover carbon dioxide even in a case where the air conditioning device 10 conditions the indoor air. In this case, for example, the control device 50 may control the switching mechanism 33 to switch the air passage to the second air passage.

In addition, in the present embodiment, the air conditioning device 10 may recover or separate carbon dioxide using the thermal energy or cold energy from the refrigerant of the air conditioning device 10 even when the air conditioning device 10 does not condition the indoor air (for example, when the indoor space is neither heated nor cooled). In this case, for example, the control device 50 may operate the compressor 13 in a state where the outdoor blower 15 and the indoor blower 16 are stopped, and may circulate the refrigerant between the indoor unit 12 and the outdoor unit 11 (so-called defrosting operation or the like).

Further, in the present embodiment, the control device 50 may control the air conditioning device 10 as follows.

In the present embodiment, the control device 50 can operate the air conditioning device 10 in the first operation mode or the second operation mode. The air conditioning device 10, which is operated in the first operation mode, operates at a capacity lower than the rated capacity of the air conditioning device 10. The air conditioning device 10, which is operated in the second operation mode, operates by increasing a blowing capacity of at least one of the outdoor blower 15 or the indoor blower 16 compared to when it is operated in the first operation mode.

When the air conditioning device 10 is operated by increasing the blowing capacity of at least one of the outdoor blower 15 or the indoor blower 16, more air is blown to the carbon dioxide recovery device 30 than in a case in which the blowing capacity is not increased. Therefore, the carbon dioxide recovery device 30 recovers a greater amount of carbon dioxide.

The control device 50 may operate the air conditioning device 10 in the second operation mode when it had determined to operate the air conditioning device 10 in the first operation mode based on air conditioning conditions and it determines to increase a recovery capacity of carbon dioxide based on a carbon dioxide recovery condition.

The control device 50 selects the operation mode based on the air conditioning conditions. The air conditioning conditions are set based on, for example, a target temperature, a room temperature, a rotational speed of the motor of the outdoor blower 15 or a rotational speed of the motor of the indoor blower 16 (hereinafter, these may be collectively referred to as rotational speed), a pressure of the refrigerant, and the like. For example, the control device 50 acquires the target temperature by receiving an input from the user. For example, the control device 50 acquires the room temperature from a temperature sensor.

For example, the control device 50 acquires the rotational speed from the outdoor blower 15 and the indoor blower 16. For example, the control device 50 acquires the pressure of the refrigerant from a pressure sensor provided in a circulation path of the refrigerant. For example, the control device 50 acquires the rotational speed and the pressure of the refrigerant over time until the room temperature reaches the target temperature, and estimates a load of the air conditioning device 10. In this case, the control device 50 may further acquire, for example, other indicators (information). In this case, the control device 50 may not acquire, for example, some or all of the target temperature, the room temperature, the rotational speed, and the pressure of the refrigerant. The control device 50 selects a preferred operation mode from the plurality of operation modes based on the estimated load of the air conditioning device 10.

Even when it had determined to operate the air conditioning device 10 in the first operation mode based on such air conditioning conditions, the control device 50 may intentionally operate the air conditioning device 10 in the second operation mode when it determines to increase a recovery capacity of carbon dioxide based on a carbon dioxide recovery condition.

Examples of the conditions for recovering carbon dioxide considered by the control device 50 include the season (time) in regions with seasonal variations, such as Japan. For example, during intermediate periods (spring and autumn) when the air conditioning load is smaller compared to summer or winter, there is a risk that the amount of carbon dioxide to be recovered may decrease along with the reduction in the air conditioning load. Therefore, the control device 50 may intentionally operate the air conditioning device 10 in the second operation mode based on information about the season (for example, when it is determined that the current time falls within the intermediate period).

In this case, in a case where there is a concern that the air conditioning device 10 may supply an excessive cold energy or thermal energy to the indoor space, for example, the control device 50 may control the pressure (temperature) of the refrigerant by the compressor 13 to appropriately adjust the cold energy or thermal energy. It should be noted that the conditions for recovering carbon dioxide considered by the control device 50 may include not only long-term variations but also short-term variations, such as those occurring during daytime or nighttime.

### Resource Generation Method

The carbon dioxide recovered by the above-described recovery method is concentrated (step S15) and stored in the carbon dioxide storage device 3 (step S16). Thereafter, the carbon dioxide is transferred from the carbon dioxide storage device 3 to the carbon dioxide recycling system 4 (methanation system) and is recycled as a resource such as methane.

As described above, with the carbon dioxide recovery system 2 according to the present embodiment, the carbon dioxide recovery device 30 recovers carbon dioxide using the air blowing from the outdoor blower 15 or the indoor blower 16. Therefore, in the carbon dioxide recovery device 30 itself, (1) it is not necessary to have power for air blowing, or (2) even in a case where power for the air blowing is provided, a low-capacity power can be adopted as the power. As a result, carbon dioxide can be recovered with a simple structure.

Further, when the air conditioning device 10 operates to condition the indoor air, the air conditioning device 10 can be used to not only condition the air but also recover carbon dioxide using the air blowing from the outdoor blower 15 or the indoor blower 16. As a result, carbon dioxide can be recovered with energy savings (less energy).

In a state where the compressor 13 is stopped, the control device 50 operates at least one of the outdoor blower 15 or the indoor blower 16. Therefore, the outdoor blower 15 and the indoor blower 16 can be utilized as power for recovering carbon dioxide even when the air conditioning device 10 does not operate to condition the indoor air.

The control device 50 operates the air conditioning device 10 in the second operation mode when it had determined to operate the air conditioning device 10 in the first operation mode based on air conditioning conditions and it determines to increase a recovery capacity of carbon dioxide based on a carbon dioxide recovery condition. As a result, the control device 50 can increase a recovery capacity of the carbon dioxide even during periods when the air conditioning conditions are usually relaxed (for example, intermediate periods such as spring or autumn), which are times when the air conditioning device 10 is normally operated in the first operation mode.

The thermal energy or cold energy of the refrigerant in the air conditioning device 10 serves as at least a part of a heat source for the recovery or separation of carbon dioxide by the carbon dioxide recovery device 30. As a result, even when the carbon dioxide recovery device 30 requires the thermal energy or cold energy, either (1) the carbon dioxide recovery device 30 does not require the thermal energy or cold energy generated by itself, or (2) when the carbon dioxide recovery device 30 itself does generate the thermal energy or cold energy, the amount of generated thermal energy or cold energy can be reduced. As a result, carbon dioxide can be recovered with energy savings.

### Embodiment 2

Next, the carbon dioxide recovery system 2A according to Embodiment 2 will be described. Since the basic configuration of the carbon dioxide recovery system 2A according to the present Embodiment is the same as that of Embodiment 1, the differences will be mainly described.

In the present embodiment, as shown in FIG. 5, the carbon dioxide recovery system 2A further includes a carbon dioxide sensor 60. The carbon dioxide sensor 60 measures a carbon dioxide concentration in the indoor space. The carbon dioxide sensor 60 is connected to the control device 50.

In the present embodiment, the control device 50 operates the indoor blower 16 based on a measurement result of the carbon dioxide sensor 60. A first threshold value is stored in the control device 50. The first threshold value is a value related to the concentration measured by the carbon dioxide sensor 60. For example, in a case where the carbon dioxide concentration in the indoor space exceeds 1000 ppm, it can generally be said that the carbon dioxide concentration is high.

Therefore, the first threshold value may be 1000 ppm. Note that the first threshold value is not limited to 1000 ppm and can be appropriately set. For example, the general carbon dioxide concentration in the air can be adopted as the first threshold value. As the first threshold value, a value based on the results of pre-verification tests (including not only an actual machine test and a simulation) can also be adopted.

Next, a carbon dioxide recovery method using the carbon dioxide recovery system 2A according to the present embodiment will be described. In this recovery method, the control device 50 does not operate the compressor 13 and the like in combination with the indoor blower 16, and does not implement indoor air conditioning. However, the control device 50 may also operate the compressor 13 along with other components, and simultaneously implement indoor air conditioning.

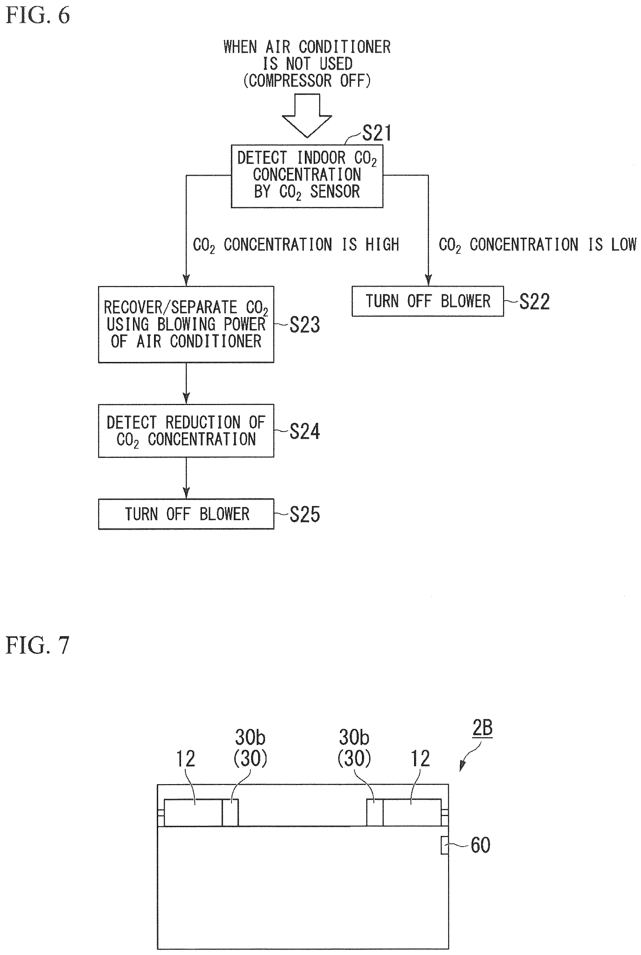

As shown in FIG. 6, the control device 50 acquires the carbon dioxide concentration in the indoor space from the carbon dioxide sensor 60 (step S21). In a case where the carbon dioxide concentration is lower than the first threshold value, the control device 50 does not operate the indoor blower 16 (step S22). In this case, the control device 50 continuously acquires the carbon dioxide concentration, and in a case where the carbon dioxide concentration is higher than the first threshold value, the control device 50 executes the next process.

In a case where the carbon dioxide concentration is higher than the first threshold value, the control device 50 operates the indoor blower 16 to recover the carbon dioxide using the carbon dioxide recovery device 30 (step S23). In this case, the blowing power of the indoor blower 16 may be used for the separation from the carbon dioxide recovery device 30. In addition, at this time, the outdoor blower 15 may be operated. The control device 50 continuously acquires the carbon dioxide concentration and stops the indoor blower 16 (step S25) in a case where the carbon dioxide concentration is lower than the first threshold value (step S24). Thereafter, the control device 50 continuously acquires the carbon dioxide concentration and repeats the determination and process described above.

In the present embodiment and the following embodiments, the expressions "a case where the carbon dioxide concentration is lower than the first threshold value" (hereinafter, simply referred to as "low case") and "a case where the carbon dioxide concentration is higher than the first threshold value" (hereinafter, simply referred to as "high case") are used. In a case where the carbon dioxide concentration matches with the first threshold value, as long as it is included in only one of the low case or high case, the case may be included in either the low case or high case.

### Embodiment 3

Next, the carbon dioxide recovery system 2B according to Embodiment 3 will be described. Since the basic configuration of the carbon dioxide recovery system 2B according to the present embodiment is the same as that of Embodiment 2, the differences will be mainly described.

As shown in FIG. 7, in the carbon dioxide recovery system 2B according to the present embodiment, the air conditioning device 10 includes a plurality of indoor units 12. Each indoor unit 12 is provided with a carbon dioxide recovery device 30. The air conditioning device 10 may include one outdoor unit 11 shared by the plurality of indoor units 12. Each of the plurality of indoor units 12 of the air conditioning device 10 may individually include the outdoor unit 11.

In the carbon dioxide recovery method using the carbon dioxide recovery system 2B according to the present embodiment, for example, the control device 50 may vary the number of indoor blowers 16 to be operated (the number of indoor units 12 to be operated) in accordance with the carbon dioxide concentration.

### Embodiment 4

Next, the carbon dioxide recovery system 2C according to Embodiment 4 will be described. Since the basic configuration of the carbon dioxide recovery system 2C according to the present embodiment is the same as that of Embodiment 3, the differences will be mainly described.

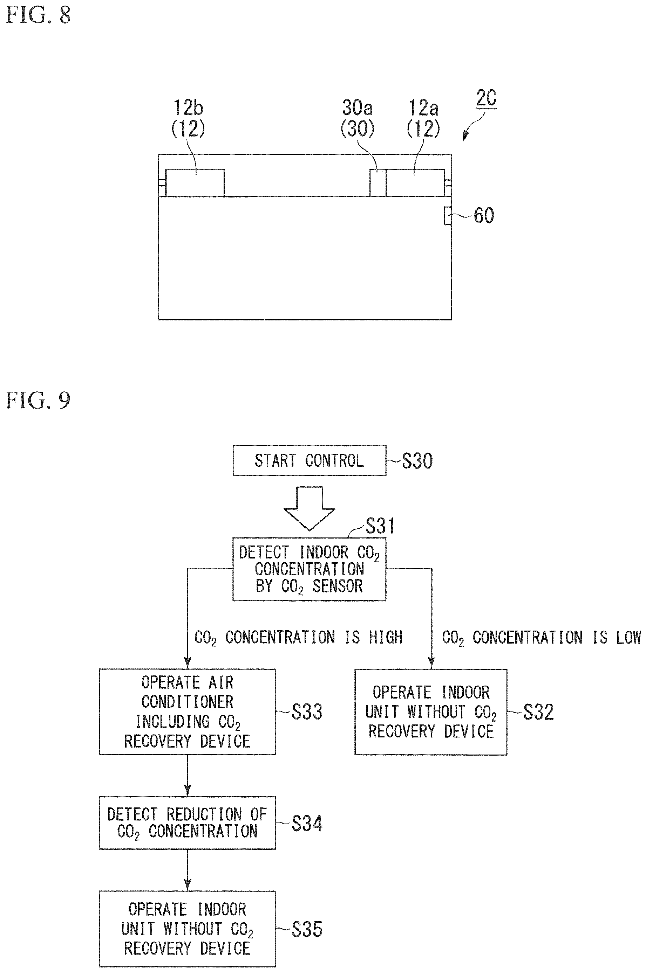

As shown in FIG. 8, in the carbon dioxide recovery system 2C according to the present embodiment, the air conditioning device 10 includes a first indoor unit 12a and a second indoor unit 12b as the indoor units 12. The first indoor unit 12a is an indoor unit 12 provided with a carbon dioxide recovery device 30. The second indoor unit 12b is an indoor unit 12 in which the carbon dioxide recovery device 30 is not provided.

Next, a carbon dioxide recovery method using the carbon dioxide recovery system 2C according to the present Embodiment will be described. In this recovery method, the control device 50 executes the recovery method, for example, when an input to start the air conditioning is received from the user (step S30).

As shown in FIG. 9, the control device 50 acquires the carbon dioxide concentration in the indoor space from the carbon dioxide sensor 60 (step S31). In a case where the carbon dioxide concentration is lower than the first threshold value, the control device 50 operates the second indoor unit 12b (step S32). In this case, when the control device 50 determines to operate more indoor units 12 based on the air conditioning conditions, the first indoor unit 12a may be operated.

In a case where the carbon dioxide concentration is higher than the first threshold value, the control device 50 operates the first indoor unit 12a to recover the carbon dioxide using the carbon dioxide recovery device 30 (step S33). In this case, the blowing power of the indoor blower 16 may be used for the separation from the carbon dioxide recovery device 30. The control device 50 continuously acquires the carbon dioxide concentration, and in a case where the carbon dioxide concentration becomes lower than the first threshold value (step S34), the second indoor unit 12b is operated instead of the first indoor unit 12a (step S35). Thereafter, the control device 50 continuously acquires the carbon dioxide concentration and repeats the determination and process described above.

As described above, in the carbon dioxide recovery method according to the present embodiment, the control device 50 preferentially operates the indoor blower 16 of the first indoor unit 12a in a case where the carbon dioxide concentration is higher than the first threshold value, and preferentially operates the indoor blower 16 of the second indoor unit 12b in a case where the carbon dioxide concentration is lower than the first threshold value.

As described above, with the carbon dioxide recovery systems 2A, 2B, and 2C according to Embodiments 2 to 4, the control device 50 operates the indoor blower 16 based on the measurement results of the carbon dioxide sensor 60. Therefore, the amount of carbon dioxide to be recovered by the carbon dioxide recovery device 30 can be changed according to the carbon dioxide concentration in the indoor space.

In a case where the carbon dioxide concentration is higher than the first threshold value, the control device 50 preferentially operates the indoor blower 16 of the first indoor unit 12a, and in a case where the carbon dioxide concentration is lower than the first threshold value, the control device 50 preferentially operates the indoor blower 16 of the second indoor unit 12b. Therefore, the amount of carbon dioxide to be recovered by the carbon dioxide recovery device 30 can be adjusted with high accuracy according to the carbon dioxide concentration in the indoor space.

### Embodiment 5

Next, the carbon dioxide recovery system 2D according to Embodiment 5 will be described. Since the basic configuration of the carbon dioxide recovery system 2D according to the present embodiment is the same as that of Embodiment 2, the differences will be mainly described.

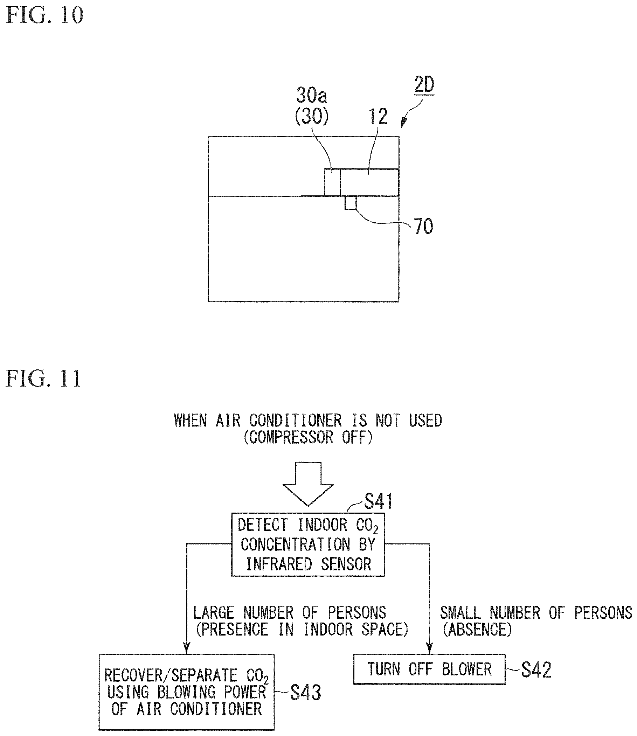

In the present embodiment, as shown in FIG. 10, the carbon dioxide recovery system 2D further includes an infrared sensor 70 instead of the carbon dioxide sensor 60. The infrared sensor 70 measures the temperature of the indoor space. The carbon dioxide sensor 60 is connected to the control device 50. As the infrared sensor 70, the infrared sensor 70 built into the indoor unit 12 may be adopted.

In the present embodiment, the control device 50 operates the indoor blower 16 based on the measurement result of the infrared sensor 70. For example, the control device 50 can estimate the presence or absence of a living organism (such as a person) in the indoor space and the number of living organisms (number of persons) based on the measurement result of the infrared sensor 70. In a case where a living organism is present in the indoor space (presence in the indoor space) or the number of living organisms is large (large number of persons), the control device 50 determines that the carbon dioxide concentration in the indoor space is high.

Next, a carbon dioxide recovery method using the carbon dioxide recovery system 2D according to the present Embodiment will be described. In this recovery method, the control device 50 does not operate the compressor 13 and the like in combination with the indoor blower 16, and does not implement indoor air conditioning. However, the control device 50 may also operate the compressor 13 along with other components, and simultaneously implement indoor air conditioning.

As shown in FIG. 11, the control device 50 detects the carbon dioxide concentration in the indoor space using the infrared sensor 70 (step S41). In a case where the control device 50 determines that the carbon dioxide concentration is low (absence or small number of persons), the control device 50 does not operate the indoor blower 16 (step S42). In this case, the control device 50 continuously acquires the measurement result from the infrared sensor 70, and in a case where it determines that the carbon dioxide concentration has increased, the control device 50 executes the next process.

In a case where the control device 50 determines that the carbon dioxide concentration is high (presence in the indoor space, large number of persons), the control device 50 operates the indoor blower 16 and causes the carbon dioxide recovery device 30 to recover the carbon dioxide (step S43). In this case, the blowing power of the indoor blower 16 may be used for the separation from the carbon dioxide recovery device 30. Thereafter, the control device 50 continuously acquires the carbon dioxide concentration and repeats the determination and process described above.

As described above, with the carbon dioxide recovery system 2D according to the present embodiment, the control device 50 can operate the indoor blower 16 based on a detection result of the infrared sensor 70, thereby adjusting the amount of carbon dioxide to be recovered by the carbon dioxide recovery device 30 according to, for example, the presence or absence of living organisms in the indoor space or the number of living organisms.

### Embodiment 6

Next, the carbon dioxide recovery method according to Embodiment 6 will be described. It is preferable that the carbon dioxide recovery systems 2, 2A, 2B, 2C, and 2D according to the present embodiment are the carbon dioxide recovery systems 2, 2A, 2B, 2C, and 2D according to any one of the Embodiments 1 to 5 described above.

In the present embodiment, first, a power supply system 80 that supplies power to the carbon dioxide recovery systems 2, 2A, 2B, 2C, and 2D will be described.

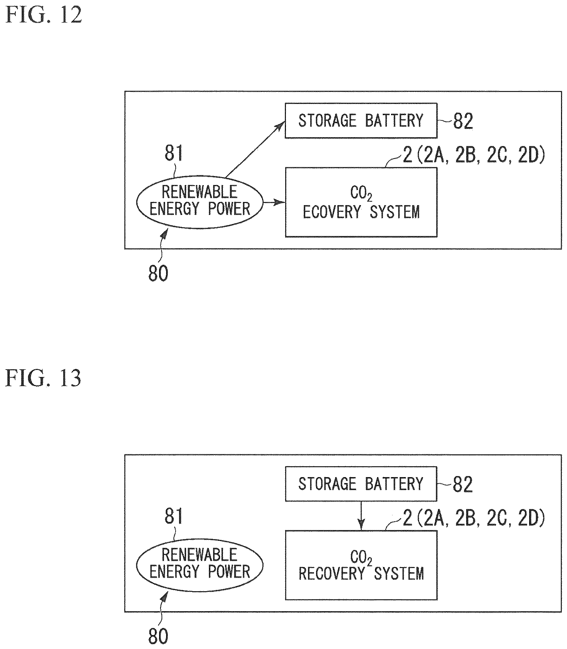

As shown in FIGS. 12 and 13, the power supply system 80 includes a power generation system 81 and a storage battery 82.

The power generation system 81 is a power generation system 81 provided outside the carbon dioxide recovery systems 2, 2A, 2B, 2C, and 2D. Examples of the power generation system 81 include a power generation system 81 using renewable energy. Examples of renewable energy include solar power. However, the power generation system 81 is not limited to a power generation system 81 using renewable energy and may also be, for example, a power generation system 81 using thermal power. Hereinafter, the power generated by the power generation system 81 is referred to as first power. The power generation system 81 can supply the first power to both the storage battery 82 and the carbon dioxide recovery systems 2, 2A, 2B, 2C, and 2D.

The storage battery 82 receives and stores the first power. As the storage battery 82, a known configuration can be adopted. Hereinafter, the power generated by the storage battery 82 is referred to as second power. The storage battery 82 can supply the second power to the carbon dioxide recovery systems 2, 2A, 2B, 2C, and 2D.

Next, a carbon dioxide recovery method according to the present embodiment will be described. In this recovery method, the carbon dioxide recovery systems 2, 2A, 2B, 2C, and 2D recover carbon dioxide using the first power during the first period as shown in FIG. 12, and recover carbon dioxide using the second power during the second period as shown in FIG. 13. For example, in a case where the power generation system 81 is a power generation system 81 using solar power, the first period includes daytime when the power generation system 81 generates a large amount of power, and the second period includes nighttime when the power generation system 81 generates a small amount of power.

The determination of daytime and nighttime may be made, for example, based on the amount of daylight or based on the time. It should be noted that the determination of the daytime and nighttime (the determination between the first period and the second period) can be made by, for example, the control device 50.

In the present embodiment, as shown in FIG. 12, during the first period, the power generation system 81 supplies the first power to both the storage battery 82 and the carbon dioxide recovery systems 2, 2A, 2B, 2C, and 2D. The storage battery 82 stores the first power during the first period. In the second period, the power supply from the power generation system 81 to the carbon dioxide recovery systems 2, 2A, 2B, 2C, and 2D is stopped, and the storage battery 82 supplies the second power to the carbon dioxide recovery systems 2, 2A, 2B, 2C, and 2D.

### Embodiment 7

Next, the carbon dioxide recovery method according to Embodiment 7 will be described. Since the basic configuration of the carbon dioxide recovery method according to the present embodiment is the same as that of Embodiment 6, the carbon dioxide recovery method will be described with reference to the differences.

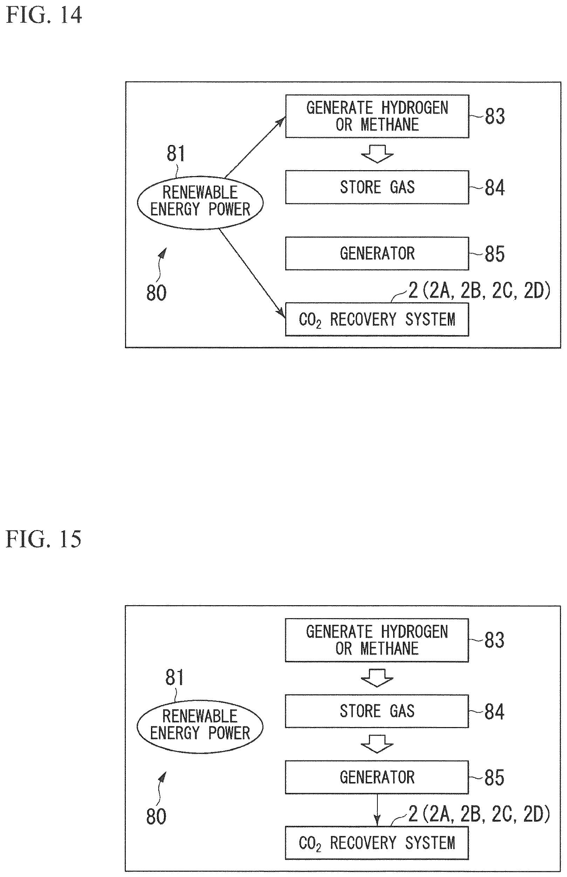

In the present embodiment, as shown in FIGS. 14 and 15, the power supply system 80 includes a gas generation system 83, a gas storage device 84, and a generator 85, instead of the storage battery 82.

The gas generation system 83 and the gas storage device 84 convert the first power into gas and store the gas.

The gas generation system 83 generates gas by receiving the supply of the first power. Examples of the gas include hydrogen, methane, and the like.

The gas storage device 84 stores the gas generated by the gas generation system 83. The gas storage device 84 may concentrate and store the gas.

The generator 85 that generates power based on the gas supplied from the gas storage device 84 can supply the generated power to the carbon dioxide recovery systems 2, 2A, 2B, 2C, and 2D. Hereinafter, the power supplied from the generator 85 is referred to as third power.

It should be noted that a well-known configuration is appropriately adopted for the gas generation system 83, the gas storage device 84, and the generator 85. For example, the generator 85 may be a fuel cell (SOFC fuel cell).

Next, a carbon dioxide recovery method according to the present Embodiment will be described. In this recovery method, the carbon dioxide recovery systems 2, 2A, 2B, 2C, and 2D recover carbon dioxide using the first power during a third period as shown in FIG. 14, and recover carbon dioxide using the third power during a fourth period as shown in FIG. 15. For example, in a case where the power generation system 81 is a power generation system 81 using solar power, the third period includes daytime when the power generation system 81 generates a large amount of power, and the fourth period includes nighttime when the power generation system 81 generates a small amount of power. The determination of daytime and nighttime may be made, for example, based on the amount of daylight or based on the time. It should be noted that the determination of the daytime and nighttime (the determination between the third period and the fourth period) can be made by, for example, the control device 50.

In the present embodiment, as shown in FIG. 14, during the third period, the power generation system 81 supplies the first power to both the gas generation system 83 and the carbon dioxide recovery systems 2, 2A, 2B, 2C, and 2D. The gas generation system 83 converts the first power into gas during the third period and stores the gas in the gas storage device 84. In the fourth period, the power supply from the power generation system 81 to the carbon dioxide recovery systems 2, 2A, 2B, 2C, and 2D is stopped, and the generator 85 supplies the third power to the carbon dioxide recovery systems 2, 2A, 2B, 2C, and 2D.

As described above, with the carbon dioxide recovery method according to Embodiments 6 and 7, for example, during specific periods such as daytime (first period and third period), the first power can be stored as power as it is or converted into gas and stored. Then, during other periods such as nighttime (second period and fourth period), carbon dioxide can be recovered using the stored power (second power) or the power generated using the converted gas (third power). Therefore, for example, even in a case where using the power supply from the power generation system 81, in which the amount of power generation varies significantly, such as with renewable energy, carbon dioxide can be stably recovered.

However, the technical scope of the present invention is not limited to the above embodiments, and various modifications can be made without departing from the gist of the present invention.

The control device 50 includes, for example, a computer system. A program for realizing the functions of each configuration of the above-described carbon dioxide recovery systems 2, 2A, 2B, 2C, and 2D may be recorded on a computer-readable recording medium, the program recorded on the recording medium may be read into a computer system, and the program may be executed to perform processing in the above-described each component. Here, the "the program recorded on the recording medium may be read into a computer system, and the program may be executed" includes installing the program in the computer system. Here, it is assumed that the term "computer system" described here includes an OS and hardware such as a peripheral device.

In addition, the "computer system" may include a plurality of computer devices connected via a network including a communication line such as the Internet or a WAN, a LAN, and a dedicated line. In addition, the "computer-readable recording medium" refers to a portable medium such as a flexible disk, a magneto-optical disk, a ROM, and a CD-ROM, and a storage device such as a hard disk built in the computer system. As described above, the recording medium in which the program is stored may be a non-transitory recording medium such as a CD-ROM.

In addition, the recording medium also includes a recording medium provided internally or externally which is accessible from a distribution server for distributing the program. It should be noted that the program may be divided into a plurality of programs and may be downloaded at different timings and then combined by each configuration provided in the carbon dioxide recovery systems 2, 2A, 2B, 2C, and 2D, or a distribution server that distributes each divided program may be different.

Further, the "computer-readable recording medium" also includes a recording medium that holds the program for a certain period of time such as a volatile memory (RAM) inside the computer system such as a server or a client in a case in which a program is transmitted via a network. In addition, the program may be a program for realizing some of the functions described above. Further, the program may be a so-called difference file (difference program) capable of realizing the functions described above in combination with a program recorded in advance in the computer system.

All or some of the functions of each control device 50 are realized by using hardware such as an application specific integrated circuit (ASIC), a programmable logic device (PLD), or a field programmable gate array (FPGA).

In addition, the above-described embodiments or modification examples may be appropriately combined.

### List of Reference Signs

- 1:: Resource generation system
- 2, 2A, 2B, 2C, 2D:: Carbon dioxide recovery system
- 3:: Carbon dioxide storage device
- 4:: Carbon dioxide recycling system
- 10:: Air conditioning device
- 11:: Outdoor unit
- 12:: Indoor unit
- 12a:: First indoor unit
- 12b:: Second indoor unit
- 13:: Compressor
- 14:: Heat exchanger
- 15:: Outdoor blower
- 16:: Indoor blower
- 30:: Carbon dioxide recovery device
- 50:: Control device
- 60:: Carbon dioxide sensor
- 70:: Infrared sensor
- 81:: Power generation system
- 82:: Storage battery
- 85:: Generator

## Claims

1. A carbon dioxide recovery system comprising:
an air conditioning device including: an outdoor unit with a compressor, a heat exchanger, and an outdoor blower; and at least one indoor unit with an indoor blower; and
a carbon dioxide recovery device that is provided downstream or upstream of the outdoor blower or the indoor blower, and that recovers carbon dioxide using air blowing from the outdoor blower or the indoor blower.

2. The carbon dioxide recovery system according to Claim 1,
further comprising:
a control device that is configured to control at least the air conditioning device among the air conditioning device and the carbon dioxide recovery device.

3. The carbon dioxide recovery system according to Claim 2,
wherein the control device operates at least one of the outdoor blower or the indoor blower in a state where the compressor is stopped.

4. The carbon dioxide recovery system according to Claim 2 or 3,
wherein the control device operates the air conditioning device in a first operation mode or a second operation mode,
the air conditioning device operated in the first operation mode operates at a capacity lower than a rated capacity of the air conditioning device,
the air conditioning device operated in the second operation mode operates by increasing a blowing capacity of at least one of the outdoor blower or the indoor blower compared to when the air conditioning device is operated in the first operation mode, and
the control device operates the air conditioning device in the second operation mode in case where the control device had determined to operate the air conditioning device in the first operation mode based on air conditioning conditions and the control device determines to increase a recovery capacity of carbon dioxide based on a carbon dioxide recovery condition.

5. The carbon dioxide recovery system according to any one of Claims 2 to 4,
wherein the control device controls at least the air conditioning device among the air conditioning device and the carbon dioxide recovery device such that a thermal energy or cold energy of a refrigerant of the air conditioning device serves as at least a part of a heat source for recovery or separation of carbon dioxide by the carbon dioxide recovery device.

6. The carbon dioxide recovery system according to any one of Claims 2 to 5, further comprising:
a carbon dioxide sensor that is connected to the control device and that measures a carbon dioxide concentration in an indoor space,
wherein the carbon dioxide recovery device is provided downstream or upstream of the indoor blower, and
the control device operates the indoor blower based on a measurement result of the carbon dioxide sensor.

7. The carbon dioxide recovery system according to Claim 6,
wherein the air conditioning device includes a plurality of indoor units that includes the indoor unit.

8. The carbon dioxide recovery system according to Claim 7,
wherein the air conditioning device includes a first indoor unit, which is an indoor unit provided with the carbon dioxide recovery device, and a second indoor unit, which is an indoor unit without the carbon dioxide recovery device, and
the control device operates the indoor blower of the first indoor unit preferentially in a case where the carbon dioxide concentration is higher than a first threshold value, and operates the indoor blower of the second indoor unit preferentially in a case where the carbon dioxide concentration is lower than the first threshold value.

9. The carbon dioxide recovery system according to any one of Claims 2 to 8, further comprising:
an infrared sensor that is connected to the control device and that measures a temperature in an indoor space,
wherein the carbon dioxide recovery device is provided downstream or upstream of the indoor blower, and
the control device operates the indoor blower based on a detection result of the infrared sensor.

10. A resource generation system comprising:
the carbon dioxide recovery system according to any one of Claims 1 to 9;
a carbon dioxide storage device that stores carbon dioxide recovered in the carbon dioxide recovery system; and
a carbon dioxide recycling system in which the carbon dioxide is supplied from the carbon dioxide storage device.

11. A carbon dioxide recovery method using the carbon dioxide recovery system according to any one of Claims 1 to 9,
wherein the carbon dioxide recovery device recovers carbon dioxide using air blowing from the outdoor blower or the indoor blower.

12. A carbon dioxide recovery method using the carbon dioxide recovery system according to any one of Claims 1 to 9,
wherein the carbon dioxide recovery device uses a thermal energy or cold energy of a refrigerant of the air conditioning device as at least a part of a heat source for recovery or separation of carbon dioxide.

13. The carbon dioxide recovery method according to Claim 11 or 12,
wherein, in the carbon dioxide recovery system, first power and second power are supplied as power, wherein the first power is from a power generation system outside the carbon dioxide recovery system, and the second power is power from a storage battery that stores the first power, and
in a first period, the carbon dioxide is recovered by the first power, and in a second period, the carbon dioxide is recovered by the second power.

14. The carbon dioxide recovery method according to any one of Claims 11 to 13,
wherein, in the carbon dioxide recovery system, first power and third power are supplied as power, wherein the first power is from a power generation system outside the carbon dioxide recovery system, and the third power is power from a generator that generates power from a gas generated by the first power, and
in a third period, the gas is generated by the first power and stored, and in a fourth period, the carbon dioxide is recovered by the third power.

15. The carbon dioxide recovery method according to Claim 14,
wherein the generator is a fuel cell.

16. The carbon dioxide recovery method according to Claim 14 or 15,
wherein the gas is hydrogen or methane.
